# EUROPÄISCHE PATENTSCHRIFT

(11) **EP 2 591 032 B1**
(45) Veröffentlichungstag und Bekanntmachung des Hinweises auf die Patenterteilung: **10.06.2015**
(21) Anmeldenummer: 10734678.5
(22) Anmeldetag: 05.07.2010
(51) Int. Cl.: C08G 18/22, C09D 175/04, C08K 3/00, C08K 5/10, C08K 5/101

(54) **POLYURETHAN-BESCHICHTUNGSMITTEL**
POLYURETHANE COATING AGENT
AGENT DE REVÊTEMENT POLYURÉTHANE

(43) Veröffentlichungstag der Anmeldung: 15.05.2013
(73) Patentinhaber: Blum, Holger, 9053 Teufen (CH)
(72) Erfinder: Blum, Holger, 9053 Teufen (CH)
(74) Vertreter: Puschmann Borchert Bardehle Patentanwälte Partnerschaft mbB
(86) Internationale Anmeldenummer: PCT/EP2010/003988
(87) Internationale Veröffentlichungsnummer: WO 2012/003843

(56) Entgegenhaltungen:
- WO-A1-2010/057824
- JP-A- 60 071 625

## Beschreibung

Die Erfindung betrifft einen Satz von Komponenten zur Herstellung eines Polyurethan-Beschichtungsmittels, ein Verfahren zur Herstellung eines Polyurethan-Beschichtungsmittels und die Verwendung des Satzes von Komponenten zur Herstellung eines Polyurethan-Beschichtungsmittels.

Der Auftrag von flüssigen Beschichtungen mit anorganischen Füllmitteln ist mit Schwierigkeiten verbunden, weil wegen der suspendierten Partikel der Verlauf des Beschichtungsmittels je nach Geometrie des zu beschichtenden Untergrundes mangelhaft und unterschiedlich ist. Um diese Störungen zu vermeiden, war man bisher gezwungen einen relativ hohen Anteil an flüchtigen Lösungsmitteln zu verwenden oder einen Teil der blättchenförmigen Pigmente durch kugelförmige Pigmente zu ersetzen, siehe beispielsweise US-A-2,312,088; US-A-3,901,688 ; US-A-3,907,608; US-A-0,026,710 und US-A-4,236,934.

Die WO 2010/057824 A1 offenbart eine Polyurethan-Beschichtung, die eine lange Tropfzeit, sowie eine kurze Trockenzeit aufweist. Gemäß Beispiel 6 dieser Druckschrift umfasst das hergestellte Beschichtungsmittel Lupranol 1301, Basonat HI100, eine Titanverbindung als Katalysator und N-Methylacetat. Der Katalysator wird dabei durch eine Reaktion durch Isopropylethanat und Ölsäure hergestellt und unmittelbar vor der Verwendung des Beschichtungsmittels wird der Katalysator mit den anderen Komponenten zusammengemischt, die auch anorganische Füllstoffe enthalten können. Als Lösungsmittel wird 1-Methoxypropyl-2-Acetat oder N-Methylacetat erwähnt.

JP 60071625 A lehrt, dass man das Fliessverhalten hochgefüllter Zweikomponenten Polyurethanbeschichtungen durch Zugabe von 0,1 bis 5% Titan-IV-Verbindungen der Formel Ti(OR)x(OCOR1)y(OCOZNH2)z, wobei R= C3-C8 Kohlenwasserstoffrest; R1 = C1 -C18 Kohlenwasserstoffrest; Z= C1 bis C8 Kohlenwasserstoffrest ; x,y,z= 1 oder 2 ; x + y + z = 4 ist, verbessern kann, indem diese Titanverbindungen die Viskosität des flüssigen Beschichtungsmittels vermindern. Dabei werden flüssige Beschichtungsmittel mit geringer Anfangsviskosität erhalten, die jedoch schnell eindickten und gelierten, weil die verwendete Titanverbindung die Reaktion des Isocyanates mit der Hydroxylkomponente bedeutend beschleunigt. Infolgedessen ist die Topfzeit des flüssigen Polyurethan-Beschichtungsmittels auf Basis der JP 60071625 A für den praktischen Einsatz zu kurz.

Es ist Aufgabe der Erfindung, einen Satz von Komponenten zur Herstellung eines Polyurethan-Beschichtungsmittels, ein Verfahren zur Herstellung eines Polyurethan-Beschichtungsmittels und die Verwendung des Satzes von Komponenten zur Herstellung eines Polyurethan-Beschichtungsmittels bereit zu stellen, wobei eine lange Topfzeit, ein kurze Trockenzeit und eine gute Fließfähigkeit beim Auftrag auf horizontal ebene Flächen erreicht werden soll.

Dazu sind der erfindungsgemäße Satz von Komponenten zur Herstellung eines Polyurethan-Beschichtungsmittels in der in Anspruch 1 angegebenen Weise, das erfindungsgemäße Verfahren in der in Anspruch 14 angegebenen Weise und die Anwendung der Komponenten in der in Anspruch 16 angegebenen Weise ausgebildet. Vorteilhafte Ausführungsformen der Erfindung sind in den Unteransprüchen charakterisiert.

Es wurde gefunden, dass ein lösungsmittelarmes, niedrigvisköses Bindemittel für ein Polyurethan-Beschichtungsmittel, welches anorganische Füllmittel mit hohem Volumen enthält und welches eine lange Tropfzeit besitzt, die Merkmale von Anspruch 1 umfasst.

Es wurde gefunden, dass die flüchtige Verbindung die katalytische Isocyanat-Hydroxyl-Reaktion der unter 3) genannten Titanverbindung der Formel I Ti(OR)x(OCOR1)y verzögert, ohne dass die Fähigkeit der Verbesserung der Fließfähigkeit beeinträchtig wird.

Ursache ist die Bildung eines Chelatkomplexes der nachstehenden Formel II a, 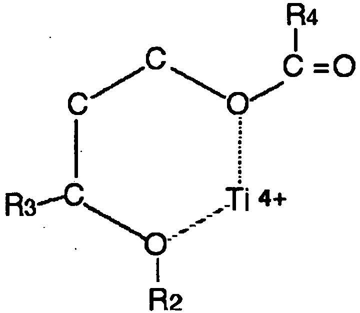 welche reversibel entsteht aus der Titanverbindung der Formel I und der als zweizähligen Liganden fungierenden flüchtigen Verbindung der Formel II.

Erst nach Abdunsten der flüchtigen Verbindung der Formel II aus dem auf den Untergrund aufgetragenen Beschichtungsmittel wird die reaktionsbeschleunigende Wirkung der Titanverbindung der Formel I nicht mehr verzögert, da der Chelatkomplex nicht mehr vorhanden ist, und es kommt zu einer schnellen Isocyanat-Durchhärtung des Beschichtungsmittels.

In vorteilhafter Weise ist der anorganische Füller in dem erfindungsgemäßen Polyurethan-Beschichtungsmittel ein blättchenförmiges oder lamellenartiges Pigment. Beschichtungen mit ausschließlich blättchenförmigen Pigmenten weisen einen erhöhten Widerstand gegen mechanische Beanspruchung auf und bewirken einen erhöhten Korrosionsschutz des beschichteten Substrats (z.B. bei Metalloberflächen). Zwar besteht allgemein die Tendenz, dass infolge der Schwarmstruktur der suspendierten Partikel der Verlauf des Beschichtungsmittels je nach Geometrie des zu beschichtenden Untergrundes mangelhaft und unterschiedlich ist. Diese Tendenz wird jedoch in vorteilhafter Weise durch die Erfindung unterbunden.

Die flüchtige Verbindung der Formel II ist Vorteilhafterweise Bestandteil der Komponente A und/oder der Komponente B, so dass vor dem Auftragen des Beschichtungsmittels nur die drei Komponenten A und B und C miteinander vermischt werden müssen.

Die flüchtige Verbindung der Formel II darf nicht Bestandteil der Komponente C sein da eine solche Mischung, wie gefunden wurde, nicht lagerstabil ist und die Titanverbindung der Formel I durch die flüchtige Verbindung der Formel II zersetzt wird, was sich durch Ausfällung schwerlöslicher Titanverbindungen bemerkbar macht.

Die Komponente A kann weiterhin Additive und Lösungsmittel enthalten wie sie in der Lackindustrie gebräuchlich sind.

Die Komponente A des Beschichtungsmittels enthält blättchen- und lamellenförmige Pigmente aus Metallen wie z.B. Aluminium und Zink. Die blättchenförmigen Pigmente können auch nichtmetallisch sein und beispielsweise aus Glas oder Aluminiumoxid oder aus Graphit bestehen wodurch eine erhöhte chemische Beständigkeit der Beschichtung erreicht wird.

In besonders vorteilhafter Weise der Ausgestaltung der Erfindung besteht die Polyhydroxylverbinding der Komponente A aus dem Reaktionsprodukt von Bisphenol A der Formel III 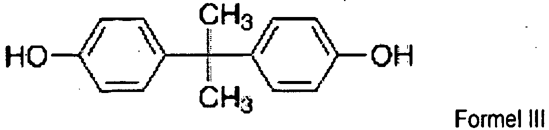 mit Propylenoxid als einem niedermolekularen Diol mit vorwiegend sekundären Hydroxylgruppen. Durch Anwesenheit vorwiegend sekundärer Hydroxylgruppen wird die Topfzeit der Beschichtung verlängert.

In besonders vorteilhafter Weise der Ausgestaltung der Erfindung besteht die Polyhydroxylverbinding der Reaktionskomponente A aus dem Reaktionsprodukt von Bisphenol A der Formel III 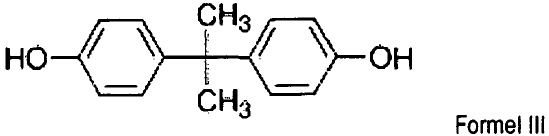 mit Epichlorhydrin in alkalischen Milieu als einem Polyol mit vorwiegend sekundären Hydroxylgruppen und zusätzlichen Epoxydgruppen. Die zusätzlichen Epoxydgruppen bewirken eine bessere Benetzung und Haftung der Beschichtung beim Auftragen auf den Untergrund.

In besonders vorteilhafter Weise der Ausgestaltung der Erfindung weist die Polyisocyanatverbinding der Reaktionskomponente B die Struktur gemäß der nachstehenden Formel IV auf 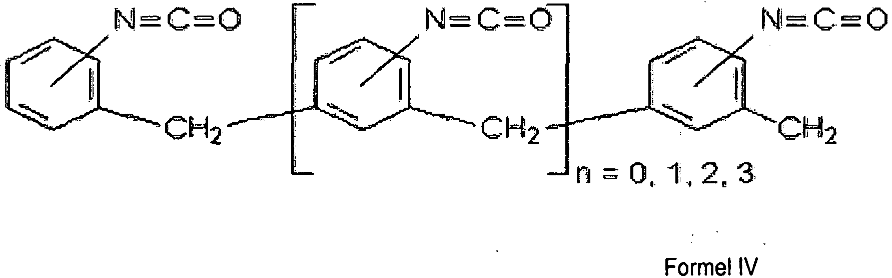 wobei n = 0 bis 3 ist.

Diese flüssige Substanz ist bekannt als technisches polymeres Diphenylmethandiisocyanat. (PMDI) und hat die CAS Nummer 9016-87-9. Diese Art polymerer Isocyanate bewirken eine Durchhärtung und Vernetzung der Beschichtung auch bei niedrigen Temperaturen bei der Anwendung.

In besonders vorteilhafter Weise der Ausgestaltung der Erfindung weist die Titanverbindung der Formel I ; Ti(OR)x(OCOR1)y die Struktur gemäß Formel V auf.

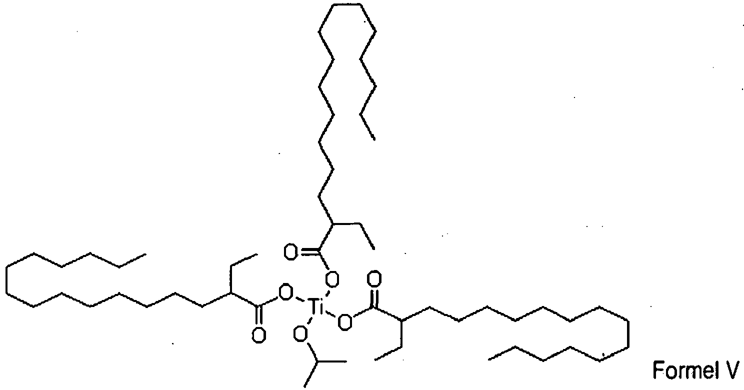

Dies entspricht der chemischen Bezeichnung Tris(Isooctadecanoato-O-)(propan-2-olato) Titan und der CAS Nummer 61417-49-0. Diese Art Titanverbindung weist eine hohe Reaktionsbeschleunigende Wirkung als Isocyanat-Hdroxyl-Katalysator auf verbunden mit sehr guter Grenzflächenwirksamkeit infolge der langen, nichtpolaren Kohlenwässerstoffkette der Isostearinsäure.

Die Komponente C weist Vorteilhafterweise 1-10 Volumenprozent der Titan-Verbindung der Formel I gelöst in einem flüchtigen Kohlenwasserstoff auf. Weiter bevorzugt ist es, dass der flüchtige Kohlenwasserstoff ein Aromat mit 7- 9 Kohlenstoffatomen ist.

In besonders vorteilhafter Ausgestaltung der Erfindung weist die flüchtige Verbindung der Formel II die Struktur gemäß Formel VI auf:

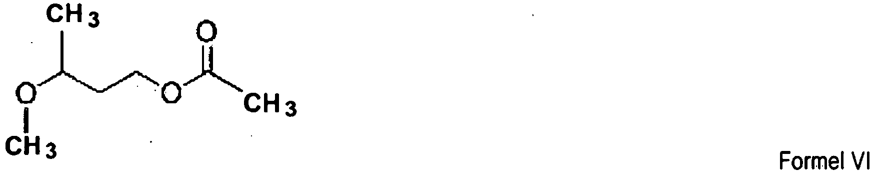

Dies entspricht der chemischen Bezeichnung 3-Methoxy-1-butylacetat und der CAS Nummer 4435-53-4. Diese Verbindung weist eine sehr gute Flüchtigkeit auf.

Das erfindungsgemäße Verfahren zur Herstellung eines durch chemische Isocyanat-Reaktion härtbares Polyurethan-Beschichtungsmittels, umfasst die Schritte: (A) Bereitstellen einer flüssigen Reaktionskomponente A enthaltend die Polyhydoxylverbindung des Polyurethanbindemittels, (B) Bereitstellen einer flüssigen Reaktionskomponente B enthaltend das Polyisocyanat zur Vernetzung der Polyhydroxylverbindung, wobei ein blättchenförmiges oder lamellenartiges Pigment in der Komponente A und/oder B enthalten ist, und wobei die Reaktionskomponenten A und/oder B eine flüchtige Verbindung der Formel II enthält/enthalten, wobei R2 , R3, R4 = den -Methyl oder Ethylrest bedeutet, sowie (C) Bereitstellen als separate Fliessmittel -und Katalysator-Komponente C eine Titanverbindung der Formel I wobei R= C1 bis C8 Kohlenwasserstoffrest; R1 = C10-C18 Kohlenwasserstoffrest; x= 1 oder 2; y= 2 oder 3; x + y = 4 ist, und (D) Zusammenmischen der Komponenten A) bis C) unmittelbar vor der Verwendung des Beschichtungsmittels.

Eine Ausführungsform des Verfahrens ist dadurch gekennzeichnet, dass zuerst die Komponenten A und C zusammengemischt werden, und dass danach die Komponente B zu der Mischung aus den Komponenten A und C zugemischt wird. Nach kurzem Umrühren des Beschichtungsmittels ergibt sich dabei in besonders vorteilhafter Weise eine gut fließende Masse frei von Ungleichmäßigkeiten.

Die Erfindung wird nun an Hand der nachstehenden Beispiele erläutert

### BEISPIEL 1

Reaktionskomponente A: 70 Gewichtsteile Bisphenol A Propylenoxid-Diol mit einer OH Zahl von 285 werden in 25 Gewichtsteilen Xylol gelöst. In diese Lösung, welche freie Hydroxylgruppen enthält, werden 85 Gewichtsteile fein gemahlenes, blättchenförmiges Zink und 40 Gewichtsteile fein gemahlenes, blättchenförmiges Aluminium unter Rühren suspendiert.

Reaktionskomponente B: 80 Gewichtsteile polymeres Diphenylmethandiisocyanat der Formel IV mit einem Gehalt an reaktionsfähigen Isocyanatgruppen von 31 Gewichtsprozent werden mit 20 Gewichtsteilen 3-Methoxy-1-butylacetat (Formel VI) vermischt.

Flüssige Fliessmittel -und Katalysatorkomponente C: Es wurden1 Mol Isopropyltitanat, CAS Nummer 546-68-9, mit 3 Mol Isostearinsäure, CAS Nummer 30399-84-9, drei Tage lang bei 60 °C unter einer Stickstoffatmosphäre gerührt.

Das flüssige, dunkelrote, homogene Reaktionsprodukt der Formel I, mit x=1 und y=3 wurde bei 60 °C unter Vakuum und Durchleiten von Stickstoff weitgehend vom freigesetzten Isopropylalkohol befreit und lieferte 1 Mol technisch reines Tris- (Isooctadecanoato-O-)(propan-2-olato)Titan mit der CAS Nummer 61417-49-0.

Zur Herstellung einer flüssigen Fliessmittel -und Katalysatorkomponente C wurden 1 Volumenteil dieser Titan-IV-Verbindung mit 99 Volumenteilen Xylol vermischt.

Zum Gebrauch wurden 20 Gewichtsteile Reaktionskomponente A unmittelbar vor der Anwendung mit 1 Gewichtsteil flüssiger Fliessmittel -und Katalysatorkomponente C gründlich gemischt. Zu dieser Vormischung werden anschließend soviel Gewichtsteile Reaktionskomponente B unter Rühren zugegeben, dass die fertig angesetzte Beschichtungsmasse 1,25 Mol Isocyanatgruppen pro Mol freie Hydroxylgruppe enthält.

Das fertig gemischte Beschichtungsmittel wurde mittels Rolle auf eine horizontal im Freien bei 14 °C eben gelagerte Stahlplatte aufgetragen und der Verlauf des Beschichtungsmittels gemäß folgender Bewertungsskala beurteilt:
Verlaufzahl 1 = keine Rollenstreifen , glatter Verlauf
Verlaufzahl 2 = einige Rollenstreifen , glatter Verlauf
Verlaufzahl 3 = Rollenstreifen ebnen sich auf ca. 50 % der beschichteten Fläche ein
Verlaufzahl 4 = Rollenstreifen ebnen sich auf ca. 20 % der beschichteten Fläche ein
Verlaufzahl 5 = Rollenstreifen ebnen sich nicht ein.

Das erfindungsgemäße Beschichtungsmittel des Beispiels 1 wies folgende Verarbeitungseigenschaften auf:
Topfzeit der Mischung: 4 Stunden
Aushärten des Beschichtungsmittels bis Handtrocken: 2 Stunden
Verlauf: Verlaufzahl 1 bis 2

### BEISPIEL 2

Reaktionskomponente A: 70 Gewichtsteile Bisphenol A Propylenoxid-Diol mit einer OH Zahl von 285 werden in 25 Gewichtsteilen Xylol gelöst. In diese Lösung, welche freie Hydroxylgruppen enthält, werden 85 Gewichtsteile fein gemahlenes, blättchenförmiges Zink und 40 Gewichtsteile fein gemahlenes blättchenförmiges Aluminium unter Rühren suspendiert.

Reaktionskomponente B: 80 Gewichtsteile polymeres Diphenylmethandiisocyanat der Formel IV mit einem Gehalt an reaktionsfähigen Isocyanatgruppen von 31 Gewichtsprozent werden mit 20 Gewichtsteilen 3-Methoxy-1-butylacetat vermischt.

Flüssige Fliessmittel -und Katalysatorkomponente C : 1 Volumenteil flüssiges Tris (Isooctadecanoato-O-)(propan-2-olato)Titan werden in 99 Volumenteilen Xylol gelöst.

Zum Gebrauch wurden 20 Gewichtsteile Reaktionskomponente A unmittelbar vor der Anwendung mit 1 Gewichtsteil flüssiger Fliessmittel -und Katalysatorkomponente C gründlich gemischt. Zu dieser Vormischung werden anschließend soviel Gewichtsteile Reaktionskomponente B unter Rühren zugegeben, dass die fertig angesetzte Beschichtungsmasse 2 Mol Isocyanatgruppen pro Mol freie Hydroxylgruppe enthält.

Die fertig gemischte Beschichtung wurde mittels Rolle auf eine horizontal im Freien bei 14 °C gelagerte Stahlplatte aufgetragen und der Verlauf des Beschichtungsmittelsgemäß der in Beispiel 1 aufgeführten Bewertungsskala beurteilt:
Die erfindungsgemäße Beschichtung des Beispiels 2 wies diese Verarbeitungseigenschaften auf:
   Topfzeit der Mischung: 3 Stunden
   Aushärten des Beschichtungsmittels bis Handtrocken: 2 Stunden
   Verlauf: Verlaufzahl 1

### BEISPIEL 3

Reaktionskomponente A: 70 Gewichtsteile Bisphenol-A Propylenoxid Diol mit einer OH Zahl von 285 werden in 10 Gewichtsteilen Xylol und 15 Gewichtsteilen 3-Methoxy-1-butylacetat gelöst. In diese Lösung welche freie Hydroxylgruppen enthält werden 85 Gewichtsteile fein gemahlenes, blättchenförmiges Zink und 40 Gewichtsteile fein gemahlenes blättchenförmiges Aluminium unter Rühren suspendiert. Reaktions Komponente B: 80 Gewichtsteile polymeres Diphenylmethandiisocyanat der Formel IV mit einem Gehalt an reaktionsfähigen Isocyanatgruppen von 31 Gewichtsprozent werden mit 20 Gewichtsteilen Xylol vermischt.

Flüssige Fliessmittel -und Katalysatorkomponente C : 1 Volumenteil flüssiges Tris (Isooctadecanoato-O-)(propan-2-olato)Titan werden in 99 Volumenteilen Xylol gelöst.

Zum Gebrauch wurden 20 Gewichtsteile Reaktionskomponente A unmittelbar vor der Anwendung mit 1 Gewichtsteil flüssiger Fliessmittel -und Katalysatorkomponente C gründlich gemischt. Zu dieser Vormischung werden anschließend soviel Gewichtsteile Reaktionskomponente B unter Rühren zugegeben, dass die fertig angesetzte Beschichtungsmasse 1,25 Mol Isocyanatgruppen pro Mol freie Hydroxylgruppe enthält.

Die fertig gemischte Beschichtung wurde mittels Rolle auf eine horizontal im Freien bei 14 °C eben gelagerte Stahlplatte aufgetragen und der Verlauf des Beschichtungsmittelsgemäß der in Beispiel 1 aufgeführten Bewertungsskala beurteilt:
Die erfindungsgemäße Beschichtung des Beispiels 3 wies diese Verarbeitungseigenschaften auf:
   Topfzeit der Mischung : 4 Stunden
   Aushärten des Beschichtungsmittels bis Handtrocken: 2 Stunden
   Verlauf: Verlaufzahl 1 bis 2

### BEISPIEL 4

Reaktionskomponente A: 50 Gewichtsteile Bisphenol A Epichlorhydrin Kondensat mit einem Epoxydäquivalentgewicht von 480 werden in 50 Gewichtsteilen 2-Nitropropan gelost. In diese Lösung, welche außer Epoxydgruppen auch freie Hydroxylgruppen enthält, werden 30 Gewichtsteile fein gemahlene, blättchenförmige Glasschuppen unter Rühren suspendiert.

Reaktionskomponente B: 80 Gewichtsteile polymeres Diphenylmethandiisocyanat der Formel IV mit einem Gehalt an reaktionsfähigen Isocyanatgruppen von 31 Gewichtsprozent werden mit 20 Gewichtsteilen 3-Methoxy-1-butylacetat vermischt.

Flüssige Fliessmittel -und Katalysatorkomponente C: 1 Volumenteil flüssiges Tris (Isooctadecanoato-O-)(propan-2-olato)Titan werden in 99 Volumenteilen Xylol gelöst.

Zum Gebrauch wurden 20 Gewichtsteile Reaktionskomponente A unmittelbar vor der Anwendung mit 1 Gewichtsteil flüssiger Fliessmittel -und Katalysatorkomponente C gründlich gemischt. Zu dieser Vormischung werden anschließend soviel Gewichtsteile Reaktionskomponente B unter Rühren zugegeben, dass die fertig angesetzte Beschichtungsmasse 2 Mol Isocyanatgruppen pro Mol freie Hydroxylgruppe enthält.

Die fertig gemischte Beschichtung wurde mittels Rolle auf eine horizontal im Freien bei 14 °C eben gelagerte Stahlplatte aufgetragen, und der Verlauf des Beschichtungsmittels wurde gemäß der in Beispiel 1 aufgeführten Bewertungsskala beurteilt:
Die erfindungsgemäße Beschichtung des Beispiels 4 wies folgende Verarbeitungseigenschaften auf:
   Topfzeit der Mischung : 5 Stunden
   Aushärten des Beschichtungsmittels bis Handtrocken: 2 Stunden
   Verlauf: Verlaufzahl 1

### BEISPIELE 5 bis 8

Beschichtungen in den Stoff- und Mengenverhältnissen gemäß Beispiel 1 wurden angesetzt mit dem einzigen Unterschied, dass das 3-Methoxy-1-butylacetat in der Reaktionskomponente B durch andere flüchtige Stoffe ersetzt wurde. Die so erhaltenen Komponenten wurden gemischt und mittels Rolle auf eine horizontal im Freien bei 14 Grad Celsius gelagerte Stahlplatte aufgetragen, und der Verlauf des Beschichtungsmittels wurde gemäß der in Beispiel 1 aufgeführten Bewertungsskala beurteilt:
Die Ergebnisse sind in der nachstehenden Tabelle I aufgeführt

| Beispiel Nr | Flüchtige Verbindung in Raektionskomponente B | Verlaufzahl | Topfzeit (Stunden) | Handtrockenzeit (Stunden) |
|---|---|---|---|---|
| 1 | 3-Methox-1-Butylacetat | 1 bis 2 | 4 | 2 |
| 5 | n-Butyl-Acetat | 3 | 2 | 2 |
| 6 | 2-Methoxy-1-Ethylacetat | 3 bis 4 | 2 | 2 |
| 7 | 2-Methoxy-1-Propylacetat | 4 | 2 | 3 |
| 8 | Xylol | 4 | 1 | 2 |

Wie aus der Tabelle I ersichtlich bewirkt nur die Anwendung von 3-Methoxy-1-butylacetat (Formel II, R2 , R3, R4 = Methyl), in Kombination mit dem Titanester der Formel I einen guten Verlauf der Beschichtungen verbunden mit einer ausreichend langen Topfzeit und gepaart mit einer kurzen Trockenzeit.

Als Ergebnis liefern die erfindungsgemäßen Beispiele 1 bis 4 Polyurethan-Beschichtungsmttel mit ausschließlich blättchenförmigen Pigmenten, welche die vorteilhafte Kombination von langer Topfzeit, kurzer Trockenzeit und guter Fliessfähigkeit beim Auftrag auf horizontal ebene Flächen aufweisen.

### VERGLEICHSBEISPIEL 1

Fortlassen des Titanesters der Formel I und des 3-Methoxy-1-butylacetats (flüchtige Verbindung der Formel II R2 , R3, R4 = Methyl):
Reaktionskomponente A: 70 Gewichtsteile Bisphenol A Propylenoxid Diol mit einer OH Zahl von 285 werden in 25 Gewichtsteilen Xylol gelöst. In diese Lösung welche freie Hydroxylgruppen enthält werden 85 Gewichtsteile fein gemahlenes, blättchenförmiges Zink und 40 Gewichtsteile fein gemahlenes, blättchenförmiges Aluminium unter Rühren suspendiert.
Reaktionskomponente B: 80 Gewichtsteile polymeres Diphenylmethandiisocyanat der Formel IV mit einem Gehalt an reaktionsfähigen Isocyanatgruppen von 31 Gewichtsprozent werden mit 20 Gewichtsteilen Xylol vermischt.

Zum Gebrauch wurden zur Reaktionskomponente A soviel Gewichtsteile Reaktionskomponente B unter Rühren zugegeben dass die fertig angesetzte Beschichtungsmasse 1,25 Mol Isocyariatgruppen pro Mol freie Hydroxylgruppe enthält.

Die fertig gemischte Beschichtung wurde mittels Rolle auf eine horizontal im Freien bei °C eben gelagerte Stahlplatte aufgetragen, und der Verlauf des Beschichtungsmittels wurde gemäß der in Beispiel 1 aufgeführten Bewertungsskala beurteilt:
Die Beschichtung des Vergleichsbeispiels 1 wies folgende Verarbeitungseigenschaften auf:
   Topfzeit der Mischung:2 Stunden
   Aushärten des Beschichtungsmittels bis Handtrocken 5 Stunden
   Verlauf: Verlaufzahl 4

### VERGLEICHSBEISPIEL 2

Es wurde die Wirkung der in JP 60071 625 A erwähnten Titanverbindung überprüft:
Zur Herstellung wurden 1 Mol Isopropyltitanat, CAS Nummer 546-68-9, mit 2 Mol Isostearinsäure, CAS Nummer 30399-84-9, und 1 Mol p-Aminobenzoesäure, CAS Nummer 150-13-0, drei Tage lang bei 60 °C unter Stickstoffatmosphäre gerührt.

Das flüssige, dunkle, homogene Reaktionsprodukt wurde bei 60 °C unter Vakuum und Durchleiten von Stickstoff weitgehend vom freigesetzten Isopropylakohol befreit und lieferte 1 Mol technisch reines Bis (Isooctadecanoato-O-)(propan-2-olato)Titan IV p-Aminobenzoat mit der CAS Nummer 98299-77-5.

Zur Herstellung einer flüssigen Fliessmittel -und Katalysatorkomponente C wurden 1 Volumenteil dieser Titan-IV-Verbindung mit 99 Volumenteilen Xylol vermischt.

Reaktionskomponente A: 70 Gewichtsteile Bisphenol A Propylenoxid Diol mit einer OH Zahl von 285 werden in 25 Gewichtsteilen Xylol gelöst. In diese Lösung, welche freie Hydroxylgruppen enthält, werden 85 Gewichtsteile fein gemahlenes, blättchenförmiges Zink und 40 Gewichtsteile fein gemahlenes, blättchenförmiges Aluminium unter Rühren suspendiert.

Reaktions-Komponente B: 80 Gewichtsteile polymeres Diphenylmethandiisocyanat der Formel IV mit einem Gehalt an reaktionsfähigen Isocyanatgruppen von 31 Gewichtsprozent werden mit 20 Gewichtsteilen 3-Methoxy-1-butylacetat vermischt.

Zum Gebrauch wurden 20 Gewichtsteile Reaktionskomponente A unmittelbar vor der Anwendung mit 1 Gewichtsteil flüssiger Fliessmittel -und Katalysatorkomponente C gründlich gemischt. Zu dieser Vormischung werden anschließend soviel Gewichtsteile Reaktionskomponente B unter Rühren zugegeben, dass die fertig angesetzte Beschichtungsmasse 1,25 Mol Isocyanatgruppen pro Mol freie Hydroxylgruppe enthält.

Die fertig gemischte Beschichtung wurde mittels Rolle auf eine horizontal im Freien bei 14 °C gelagerte Stahlplatte aufgetragen und der Verlauf des Beschichtungsmittelsgemäß der in Beispiel 1 aufgeführten Bewertungsskala beurteilt:
Die Beschichtung des Vergleichsbeispiels 2 wies folgende Verarbeitungseigenschaften auf:
   Topfzeit der Mischung: 2 Stunden
   Aushärten des Beschichtungsmittels bis Handtrocken: 2 Stunden
   Verlauf: Verlaufzahl 2 bis 3

### VERGLEICHSBEISPIEL 3

Reaktionskomponente A: 70 Gewichtsteile Bisphenol A Propylenoxid-Diol mit einer OH Zahl von 285 werden in 25 Gewichtsteilen Xylol gelöst. In diese Lösung welche freie Hydroxylgruppen enthält werden 85 Gewichtsteile fein gemahlenes, blättchenförmiges Zink und 40 Gewichtsteile fein gemahlenes, blättchenförmiges Aluminium unter Rühren suspendiert. Anschließend wurde zu der so erhaltenen Pigmentsuspension unter fortgesetztem Rühren 20 Gewichtsteile einer Lösung von 1 Volumenteil Tris- (Isooctadecanoato-O-)(propan-2-olato)Titan, Formel V, in 99 Volumenteilen Xylol gegeben. Vor dem Gebrauch wurde die Reaktionskomponente A einen Monat lang bei Raumtemperatur gelagert.

Reaktionskomponente B : 80 Gewichtsteile polymeres Diphenylmethandiisocyanat der Formel IV mit einem Gehalt an reaktionsfähigen Isocyanatgruppen von 31 Gewichtsprozent werden mit 20 Gewichtsteilen 3-Methoxy-1-butylacetat, Formel VI, vermischt.

Zum Gebrauch wurden zur Reaktionskomponente A soviel Gewichtsteile Reaktionskomponente B unter Rühren zugegeben, dass die fertig angesetzte Beschichtungsmasse 1,25 Mol Isocyanatgruppen pro Mol freie Hydroxylgruppe enthält.

Die fertig gemischte Beschichtung wurde mittels Rolle auf eine horizontal im Freien bei 14 °C eben gelagerte Stahlplatte aufgetragen und der Verlauf des Beschichtungsmittelsgemäß der in Beispiel 1 aufgeführten Bewertungsskala beurteilt:
Die Beschichtung des Vergleichsbeispiels 3 wies folgende Verarbeitungseigenschaften auf:
   Topfzeit der Mischung: 3 Stunden
   Aushärten des Beschichtungsmittels bis Handtrocken: 2 Stunden
   Verlauf: Verlaufzahl 4

Dieses Vergleichsbeispiel zeigt, dass die Komponente C erst unmittelbar vor dem Anmischen des Beschichtungsmittels zugegeben werden darf. Andernfalls ist der erwünschte Effekt nicht ausgeprägt. Es wird angenommen, dass sich die Titanverbindung langsam, d.h. innerhalb einiger Wochen, in der Pigmentmischung zersetzt.

## Patentansprüche

1. Komponentensatz zur Herstellung eines durch chemische Isocyanat-Reaktion härtbaren Polyurethan-Beschichtungsmittels, wenigstens umfassend:
r A) eine flüssigen Reaktionskomponente A enthaltend die Polyhydroxylverbindung des Polyurethanbindemittels,
B) einer flüssigen Reaktionskomponente B enthaltend das Polyisocyanat zur Vernetzung der Polyhydroxylverbindung, wobei
ein anorganisches Füllmittel in der Komponente A und/oder B enthalten ist, und wobei die Reaktionskomponenten A und/oder B eine flüchtige Verbindung der Formel II 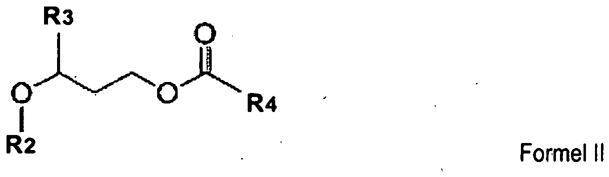 enthält/enthalten, wobei R2 , R3, R4 = den Methyl oder Ethylrest bedeutet, sowie
C) als eine separate bereitgestellte Fliessmittel- und Katalysator-Komponente C, die eine Titanverbindung der Formel I
Ti(OR)x(OCOR1)y Formel I
enthält, wobei R= C1 bis C8 Kohlenwasserstoffrest; R1 = C10-C18 Kohlenwasserstoffrest; x= 1 oder 2 ; y= 2 oder 3 ; x + y = 4 ist.

2. Komponentensatz nach Anspruch 1, **dadurch gekennzeichnet, dass** der anorganische Füller ein blättchenförmiges oder lamellenartiges Pigment umfasst.

3. Komponentensatz nach Anspruch 1, **dadurch gekennzeichnet, dass** der Gewichtsgehalt an der Titanverbindung der Formel I in der flüssigen auftragsbereiten Beschichtung 200 bis 5000 ppm beträgt.

4. Komponentensatz nach Anspruch 1, **dadurch gekennzeichnet, dass** der Gewichtsgehalt an der flüchtigen Verbindung der Formel II in der flüssigen auftragsbereiten Beschichtung 3 bis 10 Volumen Prozent beträgt.

5. Komponentensatz nach Anspruch 1, **dadurch gekennzeichnet, dass** die Komponente A blättchen- und lamellenförmige Pigmente aus Metallen, vorzugsweise aus Aluminium und Zink, enthält.

6. Komponentensatz nach Anspruch 1, **dadurch gekennzeichnet, dass** die blättchenförmigen Pigmente aus einem nichtmetallischen Material vorzugsweise aus Glas oder aus Aluminiumoxid oder aus Graphit bestehen.

7. Komponentensatz Polyurethanbeschichtungsmittel nach Anspruch 1, **dadurch gekennzeichnet, dass** die Polyhydroxylverbinding der Komponente A aus dem Reaktionsprodukt von Bisphenol A der Formel III 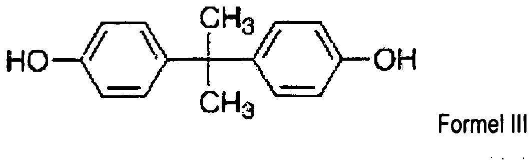 mit Propylenoxid als einem niedermolekularen Diol mit vorwiegend sekundären Hydroxylgruppen besteht.

8. Komponentensatz nach Anspruch 1, **dadurch gekennzeichnet, dass** die Polyhydroxylverbinding der Reaktionskomponente A aus dem Reaktionsprodukt von Bisphenol A der Formel III 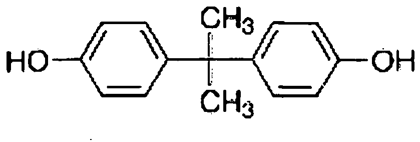 mit Epichlorhydrin in alkalischen Milieu als einem Polyol mit vorwiegend sekundären Hydroxylgruppen und zusätzlichen Epoxydgruppen besteht.

9. Komponentensatz nach Anspruch 1, **dadurch gekennzeichnet, dass** die Polyisocyanatverbinding der Reaktionskomponente B die Struktur gemäß der nachstehenden Formel IV aufweist 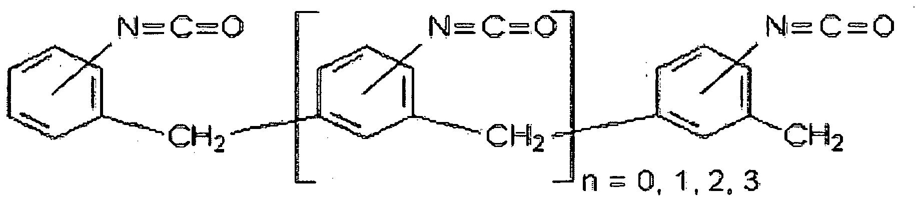 wobei n = 0 bis 3 ist.

10. Komponentensatz nach Anspruch 1, **dadurch gekennzeichnet, dass** die Titanverbindung der Formel I Tris(Isooctadecanoato-O-)(propan-2-olato) Titan mit der Struktur gemäß Formel V

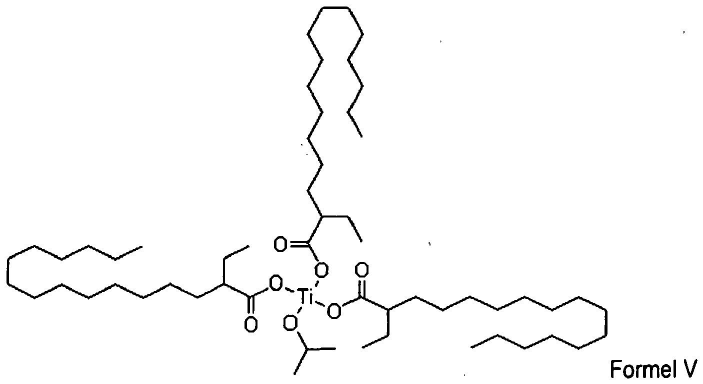

11. Komponentensatz nach Anspruch 1, **dadurch gekennzeichnet, dass** die Komponente, C1-10 Volumenprozent der Titan-Verbindung der Formel I gelöst in einem flüchtigen Kohlenwasserstoff aufweist.

12. Komponentensatz nach Anspruch 1, **dadurch gekennzeichnet, dass** flüchtigen Kohlenwasserstoff ein Aromat mit 7- 9 Kohlenstoffatomen ist.

13. Komponentensatz nach Anspruch 1, **dadurch gekennzeichnet, dass** die flüchtige Verbindung der Formel II 3-Methoxy-1-butylacetat mit der Struktur gemäß Formel VI 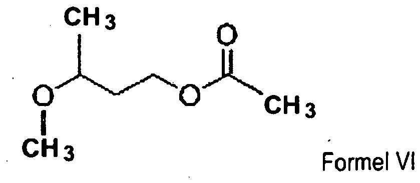 ist.

14. Verfahren zur Herstellung eines durch chemische Isocyanat-Reaktion härtbares Polyurethan-Beschichtungsmittels umfassend die Schritte:
A) Bereitstellen einer flüssigen Reaktionskomponente A enthaltend die Polyhydroxylverbindung des Polyurethanbindemittels,
B) Bereitstellen einer flüssigen Reaktionskomponente B enthaltend das Polyisocyanat zur Vernetzung der Polyhydroxylverbindung, wobei ein blättchenförmiges oder lamellenartiges Pigment in der Komponente A und/oder B enthalten ist, und wobei die Reaktionskomponenten A und/oder B eine flüchtige Verbindung der Formel II 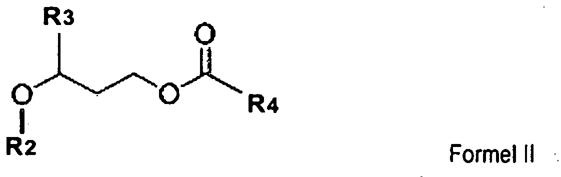 enthält/enthalten, wobei R2 , R3, R4 = den Methyl oder Ethylrest bedeutet, sowie
C) Bereitstellen als separate Fliessmittel- und Katalysator-Komponente C eine Titanverbindung der Formel I
Ti(OR)x(OCOR1)y Formel I
wobei R= C1 bis C8 Kohlenwasserstoffrest; R1 = C10-C18 Kohlenwasserstoffrest; x= 1 oder 2 ; y= 2 oder 3 ; x + y = 4 ist, und
Zusammenmischen der Komponenten A) bis C) unmittelbar vor der Verwendung des Beschichtungsmittels.

15. Verfahren nach Anspruch 14, **dadurch gekennzeichnet, dass** zuerst die Komponenten A und C zusammengemischt werden, und dass danach die Komponente B zu der Mischung aus den Komponenten A und C zugemischt wird.

16. Verwendung eines Komponentensatzes nach einem der Ansprüche 1 bis 13 zur Herstellung eines durch chemische Isocyanat-Reaktion härtbaren Polyurethan-Beschichtungsmittels.

## Claims

1. Component set for producing a polyurethane coating agent that can be cured by chemical isocyanate reaction, at least comprising:
A) A liquid reaction component A containing the polyhydroxyl compound of the polyurethane binder as well as the flakey pigments,
B) a liquid reaction component B containing the polyisocyanate for crosslinking the polyhydroxyl compound; wherein an inorganic filler is contained in the component A and/or B, and wherein the reaction components A and/or B contain a volatile compound of the Formula II 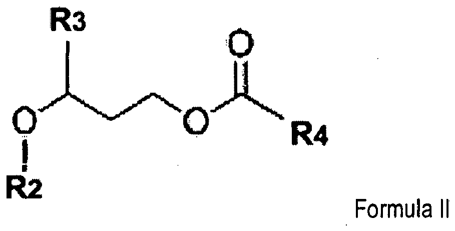 wherein R2, R3, R4 designate a methyl or ethyl group, as well as
C) a separately provided flow agent and catalyst component C containing a titanium compound of the Formula I
Ti(OR)x(OCOR1)y Formula I
wherein R = C1-C8; R1 = C10 - C18 hydrocarbon group;
x = 1 or 2; y = 2 or 3; x + y = 4.

2. Component set according to claim 1, **characterized in that** the inorganic filler comprises a flakey or lamellar pigment.

3. Component set according to claim 1, **characterized in that** the weight content of the titanium compound of the Formula I in the liquid, ready to be applied coating amounts to 200 to 5.000 ppm.

4. Component set according to claim 1, **characterized in that** the weight content of the volatile compound of the Formula III in the liquid, ready to be applied coating amounts to 3 to 10 percent by volume.

5. Component set according to claim 1, **characterized in that** component A contains flakey and lamellar pigments out of metals, preferable out of aluminum and zinc.

6. Component set according to claim 1, **characterized in that** the flakey pigments consists out of a non-metallic material, preferably out of glass or aluminum oxide or graphite.

7. Component set polyurethane coating agent according to claim 1, **characterized in that** the polyhydroxyl compound of the component A consists out of the reaction product of bisphenol A of the Formula III 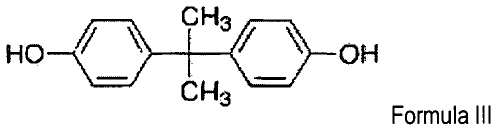 with polypropylenoxide as a low molecular diol with predominantly secondary hydroxyl groups.

8. Component set according to claim 1, **characterized in that** the polyhydroxyl compound of the reaction component A consists out of the reaction product of bisphenol A of the Formula III 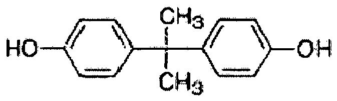 with epichlorohydrine in an alkalic environment as a polyol having predominantly secondary hydroxyl groups and additional epoxy groups.

9. Component set according to claim 1, **characterized in that** the polyisocyanate compound of the reaction component B comprises the structure according to the following Formula IV 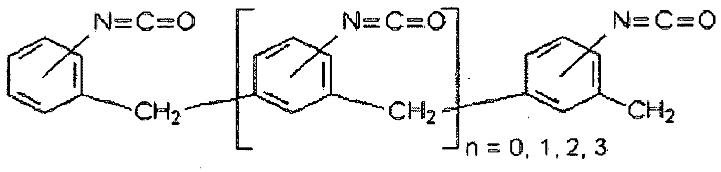 wherein n = 0 to 3.

10. Component set according to claim 1, **characterized in that** the titanium compound of the Formula I tris(isooctadecanoato-O-)(propan-2-olato)titanium comprises the structure according to Formula V

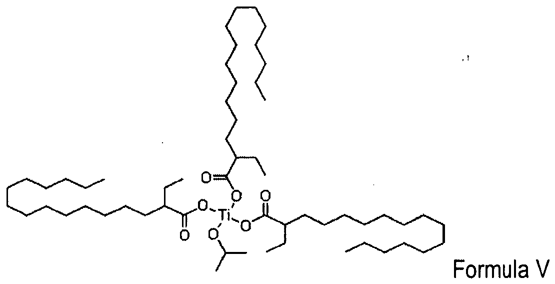

11. Component set according to claim 1, **characterized in that** the component C comprises 1 - 10 percent by volume of the titanium compound of Formula 1 which is solved in a liquid hydrocarbon agent.

12. Component set according to claim 1, **characterized in that** the volatile hydrocarbon agent is an aromatic hydrocarbon agent with 7 - 9 carbon atoms.

13. Component set according to claim 1, **characterized in that** the volatile component of the Formula II is 3-methoxy-1-butylacetate having the structure according to Formula VI

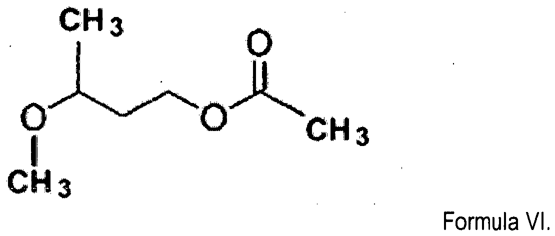

14. Method for producing a polyurethane coating agent that can be cured by chemical isocyanate reaction, comprising the steps:
A) providing a liquid reaction component A containing the polyhydroxyl compound of the polyurethane binder,
B) providing a liquid reaction component B containing the polyisocyanate for crosslinking the polyhydroxyl compound; wherein a flakey or lamellar pigment is contained in the component A and/or B, and wherein the reaction components A and/or B contain a volatile compound of the Formula II 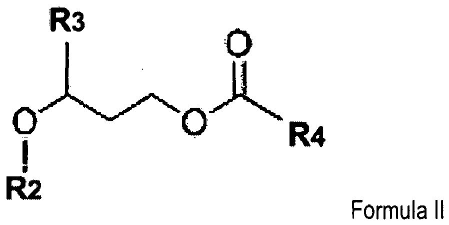 wherein R2, R3, R4 designate a methyl or ethyl group, as well as
C) providing a separately provided flow agent and catalyst component C containing a titanium compound of the Formula I
Ti(OR)x(OCOR1)y Formula I
wherein R = C1-C8; R1 = C10 - C18 hydrocarbon group; x =1 or 2; y = 2 or 3; x + y = 4, and
mixing the components A) to C) together immediately prior to the use of the coating agent.

15. Method according to claim 14, **characterized in that**, at first, component A and component B are mixed together and that, subsequently, component B is added to the mixture of component A and C.

16. Usage of a component set according to any of the proceeding claims 1 to 13 for the preparation of a chemical isocyanate reaction hardening polyurethane coating agent.

## Revendications

1. Ensemble de composants pour la production d'un agent de revêtement polyuréthane pouvant être durci par une réaction chimique d'isocyanate, comprenant au moins :
A) un composant réactif liquide A contenant le composé polyhydroxylique du liant polyuréthane,
B) un composant réactif liquide B contenant le polyisocyanate pour la réticulation du composé polyhydroxylique,
une matière de remplissage anorganique étant contenue dans le composant A ou B et les composants réactif A ou B contenant un composé volatil de la formule II 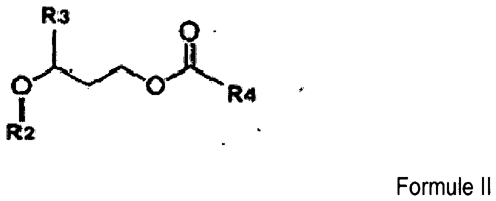 où R2, R3, R4 signifie le méthyle ou le résidu d'éthyle, ainsi qu'un
C) composant C préparé séparément en tant que catalyseur et solvant contenant un composé de titane de la formule I
Ti(OR)x(OCOR1)y Formule I
où R = C1 à C8 de résidus d'hydrocarbures ; R1 = C10 à C18 de résidus d'hydrocarbures ; x = 1 ou 2 ; y = 2 ou 3 ; x + y = 4.

2. Ensemble de composants selon la revendication 1, **caractérisé en ce que en ce que** la charge anorganique comprend un pigment sous forme de film ou de lamelle.

3. Ensemble de composants selon la revendication 1, **caractérisé en ce que** la teneur pondérale en composé de titane de la formule II dans le revêtement liquide et prêt à l'application est comprise entre 200 et 5000 ppm.

4. Ensemble de composants selon la revendication 1, **caractérisé en ce que** la teneur pondérale en composé de titane de la formule II dans le revêtement liquide et prêt à l'application est comprise entre 3 et 10 % en volume.

5. Ensemble de composants selon la revendication 1, **caractérisé en ce que** le composant A contient des pigments sous forme de film et de lamelles composés de métaux, idéalement d'aluminium et de zinc.

6. Ensemble de composants selon la revendication 1, **caractérisé en ce que** les pigments sous forme de film sont composés d'un matériau non métallique, préférablement en vitre, en oxyde d'aluminium ou en graphite.

7. Ensemble de composants d'agent de revêtement polyuréthane selon la revendication 1, **caractérisé en ce que** le composé polyhydroxylique du composant A est composé du produit de la réaction du bisphénol A de la formule III 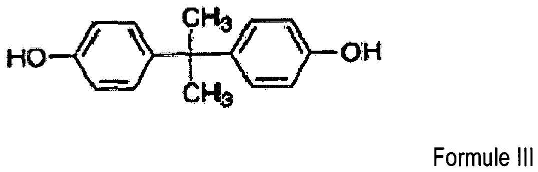 avec de l'oxyde de propylène en tant que diol de faible poids moléculaire avec des groupes hydroxylique essentiellement secondaires.

8. Ensemble de composants selon la revendication 1, **caractérisé en ce que** le composé polyhydroxylique du composant réactif A est composé du produit de la réaction du bisphénol A de la formule III 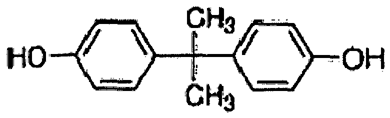 avec de l'épichlorhydrine en milieu alcalin en tant que polyol avec des groupes hydroxyliques essentiellement secondaires et des groupes époxydes supplémentaires.

9. Ensemble de composants selon la revendication 1, **caractérisé en ce que** le composé polyisocyanate des composants réactifs B présente une structure selon la formule IV suivante 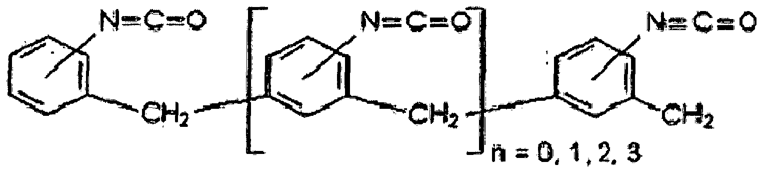 où n = 0 à 3.

10. Ensemble de composants selon la revendication 1, **caractérisé en ce que** le composé de titane de la formule I est du tris(isooctadecanoat-O(propano-2-olato)titane avec la structure selon la formule V

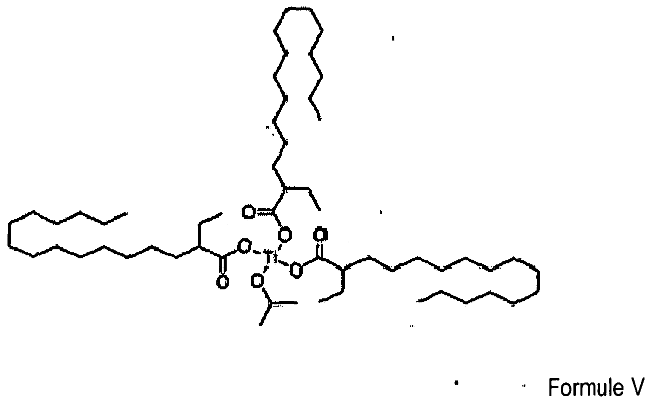

11. Ensemble de composants selon la revendication 1, **caractérisé en ce que** le composant C présente 1 à 10 % en volume du composé de titane de la formule I dissous dans un hydrocarbure volatil.

12. Ensemble de composants selon la revendication 1, **caractérisé en ce que** l'hydrocarbure volatil est une combinaison aromatique avec entre 7 et 9 atomes de carbone.

13. Ensemble de composants selon la revendication 1, **caractérisé en ce que** le composé volatil de la formule II est du 3-méthoxy-acétate de 1-butyle avec la structure selon la formule VI

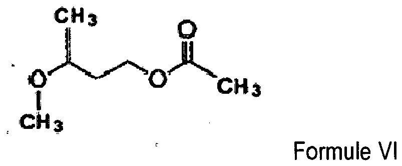

14. Procédé de production d'un agent de revêtement polyuréthane pouvant être durci par une réaction chimique d'isocyanate, comprenant les étapes suivantes :
A) Préparation d'un composant réactif liquide A contenant le composé polyhydroxylique du liant polyuréthane,
B) Préparation d'un composant réactif liquide B contenant le polyisocyanate pour la réticulation du composé polyhydroxylique, un pigment sous forme de film ou de lamelle étant contenu dans le composant A ou B et les composants réactifs A ou B contenant un composé volatil de la formule II 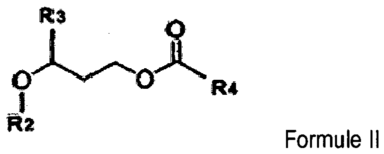 où R2, R3, R4 signifie le méthyle ou le résidu d'éthyle, ainsi qu'un
C) Préparation en tant que composant C catalyseur et solvant d'un composé de titane de la formule I
Ti(OR)x(OCOR1)y formule I
où R = C1 à C8 de résidus d'hydrocarbures ; R1 = C10 à C18 de résidus d'hydrocarbures ; x = 1 ou 2 ; y = 2 ou 3 ; x + y = 4, et
Mélange des composants A) et C) immédiatement avant l'utilisation de l'agent de revêtement.

15. Procédé selon la revendication 14, **caractérisé en ce que** les composants A et C sont d'abord mélangés ensemble, et qu'ensuite le composant B est ajouté au mélange des composants A et C.

16. Utilisation d'un ensemble de composants selon l'une des revendications 1 à 13 pour la production d'un agent de revêtement polyuréthane pouvant être durci par une réaction chimique d'isocyanate.
